Europäisches Patentamt

European Patent Office

Office européen des brevets

(11) Veröffentlichungsnummer: **0 262 474 B1**

# EUROPÄISCHE PATENTSCHRIFT

(45) Veröffentlichungstag der Patentschrift: **21.08.91**

(51) Int. Cl.5: **H04Q 11/04**

(21) Anmeldenummer: **87113135.5**

(22) Anmeldetag: **08.09.87**

(54) Verfahren zum Betrieb von Schnittstellenschaltungen zwischen einem zentralen Teil und dezentralen Teilen einer Teilnehmeranschlussbaugruppe eines digitalen Zeitmultiplex-Fernmeldenetzes.

(30) Priorität: **29.09.86 DE 3633000**

(43) Veröffentlichungstag der Anmeldung:
**06.04.88 Patentblatt 88/14**

(45) Bekanntmachung des Hinweises auf die
Patenterteilung:
**21.08.91 Patentblatt 91/34**

(84) Benannte Vertragsstaaten:
**AT BE CH DE FR GB IT LI NL SE**

(56) Entgegenhaltungen:
**GB-A- 2 053 621**
**US-A- 4 178 478**
**US-A- 4 307 378**

**MINI-MICRO CONFERENCE RECORD, Mai 1984, "paper" 6/4, Seiten 1-7, New York, US; C. STEVENS: "Advanced telecom products- Key to ISN"**

**ELECTRONIC DESIGN, Band 33, Nr. 1, Januar 1985, Seiten 199-218, Hasbrouck Heights, New Jersey, US; F. GOODENOUGH: "Telecommunication integrated circuits"**

(73) Patentinhaber: **Siemens Aktiengesellschaft**
**Wittelsbacherplatz 2**
**W-8000 München 2(DE)**

(72) Erfinder: **Rudolf, Hans-Werner, Dr.rer.nat.**
**Wörthstrasse 17**
**W-8000 München 80(DE)**
Erfinder: **Stader, Harald, Dipl.-Ing.**
**Starnbergerstrasse 21**
**W-8000 München 71(DE)**
Erfinder: **Wingerath, Norbert, Dipl.-Ing.**
**Zillertalstrasse 63**
**W-8000 München 70(DE)**
Erfinder: **Lechner, Robert, Dipl.-Ing.**
**Haidfeldstrasse 5**
**W-8156 Otterfing(DE)**

## Beschreibung

Die Erfindung betrifft ein Verfahren zum Betrieb von Schnittstellenschaltungen zwischen einem zentralen Teil und dezentralen Teilen einer Teilnehmeranschlußbaugruppe eines digitalen Zeitmultiplex-Fernmeldenetzes.

Derartige Schnittstellen spielen insbesondere bei diensteintegrierenden Fernmeldesystemen eine Rolle, bei denen sowohl Sprach- als auch Datensignale übertragen werden. Bei den Teilnehmeranschlußbaugruppen solcher Fernmeldesysteme sind als dezentrale Teile integrierte Spezialbausteine vorhanden, die ihrerseits wenigstens einem Teilnehmerendgerät zugeordnet sind, und mit einer zentralen Steuerung als zentralem Teil zusammenarbeiten. Eine Teilnehmeranschlußbaugruppe umfaßt beispielsweise acht solcher Spezialbausteine, die für jeweils zwei Teilnehmeranschlüsse zuständig sind. Zwischen solchen Bausteinen und der zentralen Steuerung sind einerseits Einstellinformationen von der zentralen Steuerung zum Baustein zu übertragen, andererseits von den Bausteinen zu der zentralen Steuerung Zustandssignale bezüglich der Teilnehmeranschlußleitungen der Teilnehmeranschlüsse zu übertragen.

Im Falle einer bekannten Architektur dieser Art wurden die Schnittstellen zwischen dem zentralen Teil und den dezentralen Teilen durch Leitungsgruppen gebildet, bei denen die Leitungen, über die zu den dezentralen Teilen Einstellinformationen übertragen werden, von den Leitungen getrennt sind, auf denen Zustandsinformationen von den dezentralen Teilen zum zentralen Teil gelangen.

Die Aufgabe der Erfindung besteht nun darin, ein Verfahren anzugeben, das den Leitungsaufwand für eine derartige Schnittstelle zu verringern gestattet und eine Bedienung der einzelnen dezentralen Teile durch den zentralen Teil mit möglichst wenig Befehlszyklen ermöglicht, wobei zur besseren dynamischen Ausnutzung des zentralen Teils alle dezentralen Teile gleichzeitig überwacht werden.

Diese Aufgabe wird mit einem Verfahren der eingangs genannten Art gelöst, das erfindungsgemäß dadurch gekennzeichnet ist, daß den zentralen Teil und die dezentralen Teile verbindende Leitungen wahlweise einerseits für die Übertragung von Informationen vom zentralen Teil an jeweils einen dezentralen Teil und andererseits für die Übertragung von durch die dezentralen Teile abgegebenen Informationen gleichzeitig an den zentralen Teil sowie von durch den zentralen Teil an die dezentralen Teile gleichermaßen zu liefernde Status-Einstellinformationen ausgenutzt werden, daß für eine serielle Informationsübertragung, bei der der zentrale Teil nacheinander Informationen an die dezentralen Teile liefert, von den genannten Leitungen solche, die den dezentralen Teilen individuell zugeordnet sind, für die Auswahl des dezentralen Teils und solche, die für die dezentralen Teile gemeinschaftlich vorgesehen sind, zu dieser seriellen Informationsübertragung ausgenutzt werden, und für eine parallele Informationsübertragung, bei der die dezentralen Teile gleichzeitig gleichartige Informationen an den zentralen Teil liefern, die gemeinsam vorgesehenen Leitungen für die Übertragung von Status-Einstellinformationen an die dezentralen Teile und die individuell vorgesehenen Leitungen für die Übertragung der genannten gleichartigen Informationen an den zentralen Teil ausgenutzt werden.

Gemäß einer weiteren Ausgestaltung der Erfindung treten die auf den gemeinsamen Leitungen an die dezentralen Teile übertragenen Einstellinformationen jeweils in Form von Kombinationen unterscheidbarer Leitungszustände auf der Gesamtheit dieser Leitung unter Berücksichtigung der Reihenfolge des Auftretens von Leitungszustandswechseln beim Erzeugen dieser Leitungszustände auf. Hiermit ist es möglich mehr unterscheidbare Einstellinformationen zu übertragen, als es der Anzahl der vorgesehenen Leitungen entspricht.

Nachstehend wird die Erfindung anhand eines Ausführungsbeispiels unter Bezugnahme auf eine Zeichnung näher erläutert. In der Zeichnung zeigen:

Fig. 1      ein Blockschaltbild zur Veranschaulichung der Teilnehmeranschlußbaugruppen-Architektur, bei der die Erfindung Anwendung findet,

Fig. 2      ein Zustandsdiagramm.

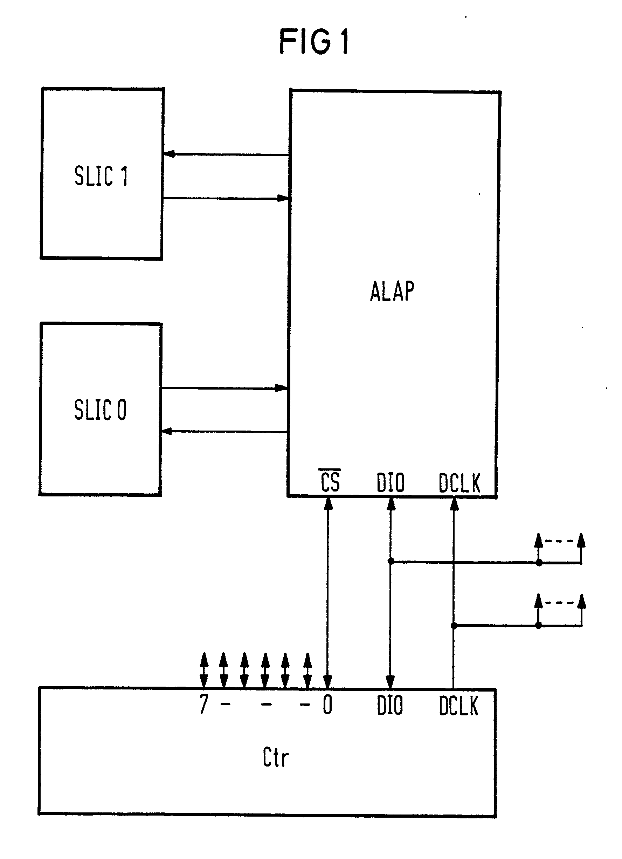

In der Figur 1 ist von einer Teilnehmeranschlußbaugruppe ein Baustein ALAP (Analog Line Audio Processor) dargestellt, der zwei Teilnehmern zugeordnet ist, und dementsprechend mit zwei Schnittstellenbausteinen SLIC 0 und SLIC 1 in Verbindung steht, die für die sogenannten BORST-Funktionen zuständig sind, also für die Speisung (Battery), den Überspannungsschutz (Overvoltage) die Rufeinspeisung (Ringing), die Signalisierungsüberwachung (Supervision), die Zwei/Vier-Drahtumsetzung (Hybrid) und den Leitungstest (Testing). Der Baustein ALAP seinerseits ist für die Analog-Digital-Umsetzung der Sprache in Digitalsignale, die Begrenzung des Sprachbandes in einem PCM-Filter, sowie für die Zeitschlitzzuordnung verantwortlich und stellt darüber hinaus die Schnittstelle für die Signalisierung- und Einstelldaten zu einer Gruppensteuerung Ctr dar.

Eine Teilnehmerbaugruppe bedient eine Mehrzahl von Teilnehmern, beispielsweise 16, in welchem Falle 8 der Bausteine ALAP vorhanden sind.

Das erfindungsgemäße Verfahren betrifft nun den Betrieb der Schnittstellenschaltungen zwischen der Gruppensteuerung Ctr als zentralem Teil einer Teilnehmeranschlußbaugruppe und den Bausteinen ALAP als dezentralen Teilen dieser Teilnehmeranschlußbaugruppe.

Aufgrund der erfindungsgemäßen Betriebsweise sind für die Verbindung der Gruppensteuerung Ctr mit einem Baustein ALAP lediglich drei Leitungen erforderlich, über die sämtliche Einstellinformationen und Indikationsgrößen für die Indikation der jeweils zugehörigen Teilnehmeranschlußleitungen übertragen werden.

Es sind dies die Leitungen $\overline{\text{CS}}$, DIO und DCLK. Bei der Leitung $\overline{\text{CS}}$ handelt es sich um eine individuell zum Baustein ALAP führende Leitung. Unter der Voraussetzung des Vorhandenseins weiterer sieben solcher Baueinheiten innerhalb einer Teilnehmeranschlußbaugruppe sind demnach, wie angedeutet, weitere sieben solcher Leitungen $\overline{\text{CS}}$ vorhanden. Die Leitungen DIO und DCLK sind Vielfachleitungen, die auch eine Verbindung der Steuerung Ctr mit weiteren nicht dargestellten Bausteinen ALAP herstellen.

Erfindungsgemäß werden diese Leitungen für die Übertragung zweier Arten unterschiedlicher Informationen ausgenutzt. Die Leitung $\overline{\text{CS}}$ dient einerseits bei der Übertragung von Einstellinformationen von der Steuerung Ctr an den Baustein ALAP als Auswahlleitung für einen der an Ctr angeschlossesenen Bausteine ALAP und andererseits der Übertragung von Indikationsinformationen vom Baustein ALAP zur Steuerung Ctr hin, die über den Leitungszustand der Teilnehmeranschlußleitung Auskunft geben.

Die Leitung DIO wird in einem Fall als serielle Datenleitung für eine Datenübertragung vom Baustein ALAP ausgenutzt, im anderen Fall dient sie der Übertragung von Statuseinstellinformationen, die von der Steuerung Ctr geliefert werden und dazu dienen, die einzelnen Leitungszustände der betroffenen Teilnehmeranschlußleitungen abzufragen.

Die Leitung DCLK wird schließlich alternativ für die Übertragung eines Taktsignals für die erwähnte serielle Datenübertragung von der Baueinheit ALAP zur Steuerung Ctr oder aber ebenfalls für die Übertragung von Statuseinstellinformationen von der Steuerung Ctr zur Baueinheit ALAP hin ausgenutzt.

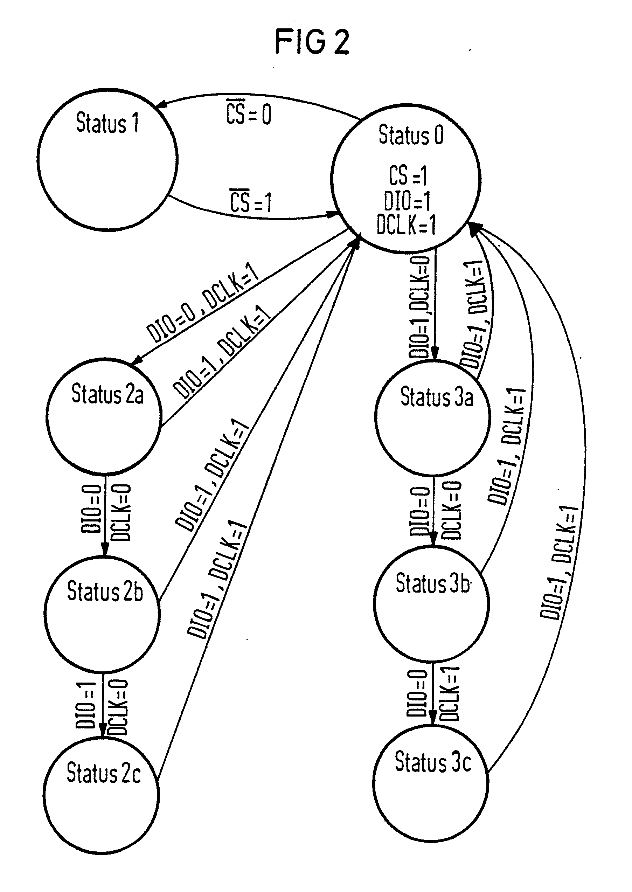

Anhand der Figur 2 werden nun die einzelnen möglichen Betriebszustände näher erläutert.

Der Status 0, der den Ruhezustand bedeutet, ist durch die binäre Leitungszustandskombination $\overline{\text{CS}} = 1$; DIO = 1; DCLK = 1 gekennzeichnet.

Ausgehend von diesem Ruhezustand kann durch den Übergang von $\overline{\text{CS}} = 1$ nach $\overline{\text{CS}} = 0$ der Status 1 erreicht werden, in dem die Leitung DIO der seriellen Datenübertragung zum Baustein ALAP hin beziehungsweise die Leitung DCLK der Übertragung des Taktsignals dienen. Die beiden Leitungen stellen in diesem Zustand eine serielle Schnittstelle dar, da sie nacheinander den einzelnen Baueinheiten ALAP zur Verfügung gestellt werden, was dadurch erreicht wird, daß der Status 1 für die einzelnen dieser Baueinheiten nacheinander mit $\overline{\text{CS}}$ = 0 eingestellt wird.

Ein Wechsel von $\overline{\text{CS}} = 0$ nach $\overline{\text{CS}} = 1$ bewirkt eine Rückkehr in den Status 0, also in den Ruhezustand.

Wie die Figur 2 ferner zeigt, können vom Status 0 ausgehend zwei Folgen von Zuständen, nämlich Status 2a bis 2c bzw. Status 3a bis 3c erreicht werden.

Der Status 2a wird durch den Übergang von DIO = 1 nach DIO = 0 bei unveränderten Leitungszuständen $\overline{\text{CS}} = 1$ und DCLK = 1 erreicht. In diesem Zustand erfolgt eine Abfrage der an die Teilnehmeranschlußschaltung SLIC 0 bzw. Baueinheit ALAP angeschlossenen Teilnehmeranschlußleitung auf den Schleifenzustand. Die dementsprechenden Schleifen zustandssignale werden in diesem Status über die Leitung $\overline{\text{CS}}$ an die Steuerung Ctr übertragen, in welchem Falle diese Leitung also gemäß der zweiten Alternative ausgenutzt ist. Auf den übrigen Leitungen $\overline{\text{CS}}$, die eine Verbindung zwischen der Steuerung Ctr und nicht dargestellten Baueinheiten ALAP herstellen, erfolgt gleichzeitig ebenfalls eine Übertragung von Schleifenzustandssignalen, was bedeutet, daß nunmehr eine parallele Schnittstelle realisiert ist.

Erfolgt von diesem Status 2a aus auf der Leitung DIO ein Zustandswechsel von DIO = 0 nach DIO = 1, dann wird wieder der Status 0 erreicht.

Ändert sich hingegen die den Status 2a bestimmende Leitungszustandskombination dahingehend, daß DCLK = 1 in DCLK = 0 übergeht, dann wird der Status 2b erreicht, in dem eine Abfrage der an die Teilnehmeranschlußschaltung SLIC 0 angeschlossenen Teilnehmeranschlußleitung bzw. aller entsprechenden an die übrigen Baueinheiten ALAP angeschlossenen Teilnehmeranschlußleitungen auf Vorliegen eines Erdschlusses erfolgt. Auch hier wird das entsprechende Erdschlussignal wieder über die Leitung $\overline{\text{CS}}$ von der Baueinheit ALAP an die Steuerung Ctr übertragen. Ein Übergang des Leitungszustands DIO = 0 zum Leitungszustand DIO = 1 führt von diesem Status 2a aus zum Erreichen des Status 0.

Vom Status 2b aus wird der Status 2c durch den Leitungszustandswechsel von DIO = 0 nach DIO = 1 erreicht. In diesen Zustand kann eine spezielle Zusatzinformation über die Leitung $\overline{\text{CS}}$ an die Steuerung Ctr gegeben werden. Auch von diesem Zustand aus kann direkt auf den Status 0 gesprungen werden, in dem ein Leitungszustandswechsel von DCLK = 0 nach DCLK = 1 herbeigeführt wird.

Die zweite Reihe von Zuständen Status 3a bis Status 3c betrifft entsprechende Abfragen und Informationsabgaben im Zusammenhang mit dem zweiten der Baueinheit ALAP zugeordneten Teilnehmer bzw. der entsprechenden Teilnehmeranschlußschaltung SLIC 1. Vom Status 0 aus wird der Status 3a dadurch erreicht, daß der Leitungszustand DCLK = 1 auf DCLK = 0 geändert wird. Wie die Figur 2 zeigt, liegen für die Einstellung der Leitungszustände des Status 2b und Status 3b die gleichen Leitungszustandskombinationen DIO = 0 und DCLK = 0 vor. Die Unterscheidung, welcher der beiden Zustände jeweils hergestellt wird, hängt davon ab, ob in der Vorgeschichte der Einstellung dieser Leitungszustandskombination ausgehend vom Status 0 zunächst ein Zustandswechsel DIO = 1 nach DIO = 0 oder ein Leitungszustandswechsel von DCLK = 1 nach DCLK = 0 stattgefunden hat.

**Patentansprüche**

1. Verfahren zum Betrieb von Schnittstellenschaltungen zwischen einem zentralen Teil und dezentralen Teilen einer Teilnehmeranschlußbaugruppe eines digitalen Zeitmultiplex-Fernmeldenetzes,
   **dadurch gekennzeichnet,** daß den zentralen Teil (Ctr) und die dezentralen Teile (ALAP) verbindende Leitungen ($\overline{\text{CS}}$, DIO, DCLK) wahlweise einerseits für die Übertragung von Informationen vom zentralen Teil an jeweils einen dezentralen Teil und andererseits für die Übertragung von durch die dezentralen Teile abgegebenen Informationen gleichzeitig an den zentralen Teil sowie von durch den zentralen Teil an die dezentralen Teile gleichermaßen zu liefernde Status-Einstellinformationen ausgenutzt werden, daß für eine serielle Informationsübertragung, bei der der zentrale Teil nacheinander Informationen an die dezentralen Teile liefert, von den genannten Leitungen solche ($\overline{\text{CS}}$), die den dezentralen Teilen individuell zugeordnet sind, für die Übertragung von Informationen zur Auswahl des betreffenden dezentralen Teils (ALAP) und solche (DIO, DCLK), die für die dezentralen Teile gemeinschaftlich vorgesehen sind, zu dieser seriellen Informationsübertragung ausgenutzt werden, und für eine parallele Informationsübertragung, bei der die dezentralen Teile gleichzeitig gleichartige Informationen an den zentralen Teil liefern, die gemeinsam vorgesehenen Leitungen für die Übertragung von Status-Einstellinformationen an die dezentralen Teile und die individuell vorgesehenen Leitungen für die Übertragung der genannten gleichartigen Informationen an den zentralen Teil ausgenutzt werden.

2. Verfahren nach Anspruch 1,
   **dadurch gekennzeichnet,** daß die auf den gemeinsamen Leitungen (DIO, DCLK) an die dezentralen Teile (ALAP) übertragenen Einstellinformationen jeweils in Form von Kombinationen unterscheidbarer Leitungszustände auf der Gesamtheit dieser Leitungen unter Berücksichtigung der Reihenfolge des Auftretens von Leitungszustandswechseln beim Erzeugen dieser Leitungszustände auftreten.

**Claims**

1. Method for operating interface circuits between a central part and decentralised parts of a subscriber line module of a digital TDM telecommunication network, characterised in that lines ($\overline{\text{CS}}$, DIO, DCLK) connecting the central part (Ctr) and the decentralised parts (ALAP) are optionally utilised, on the one hand, for the transmission of information items from the central part to in each case one decentralised part and, on the other hand, for the transmission of information items output by the decentralised parts, at the same time, to the central part and of status-setting information items similarly to be supplied by the central part to the decentralised parts, in that, for a serial information transmission in which the central part successively supplies information items to the decentralised parts, those of the said lines ($\overline{\text{CS}}$) which are individually associated with the decentralised parts are utilised for the transmission of information items for the selection of the relevant decentralised part (ALAP) and those (DIO, DCLK) provided jointly for the decentralised parts are utilised for this serial information transmission and that, for a parallel information transmission in which the decentralised parts simultaneously supply similar information items to the central part, the lines provided jointly are utilised for the transmission of status-setting information items to the decentralised parts and the lines provided individually are utilised for the transmission of the said similar information items to the central part.

2. Method according to Claim 1, characterised in that the setting information items transmitted to the decentralised parts (ALAP) on the joint lines (DIO, DCLK) in each case occur in the form of combinations of distinguishable line statuses on the totality of these lines, taking into consideration the order of occurrence of line status changes during the creation of these line statuses.

**Revendications**

1. Procédé d'exploitation de circuits d'interface entre une partie centrale et une partie décentralisée d'un module de raccordement d'abonné d'un réseau numérique de télécommunications à multiplexage temporel, caractérisé par le fait qu'on utilise au choix des lignes ($\overline{CS}$, DIO, DCLK), qui relient la partie centrale (Ctr) et les parties décentralisées (ALAP), d'une part pour la transmission d'informations de la partie centrale à une partie décentralisée respective et d'autre part pour la transmission simultanée d'informations, délivrées par les parties décentralisées, à la partie centrale ainsi que pour la transmission d'informations de réglage d'état, qui doivent être délivrées de la même manière par la partie centrale aux parties décentralisées, que pour une transmission d'informations en série, lors de laquelle la partie centrale envoie successivement des informations aux parties décentralisées, certaines ($\overline{CS}$) desdites lignes, qui sont associées individuellement aux parties décentralisées, étant prévues pour la transmission d'informations permettant de sélectionner la partie décentralisée considérée (ALAP), tandis que celle (DIO, DCLK) desdites lignes, qui sont prévues en commun pour les parties décentralisées, sont utilisées pour cette transmission d'informations en série, et que pour une transmission d'informations en parallèle, lors de laquelle les parties décentralisées envoient simultanément des informations identiques à la partie centrale, les lignes prévues en commun sont utilisées pour la transmission de l'information de réglage d'état aux parties décentralisées, et les lignes prévues individuellement sont utilisées pour la transmission desdites informations identiques à la partie centrale.

2. Procédé suivant la revendication 1, caractérisé par le fait que les informations de réglage transmises dans les lignes communes (DIO, DCLK) aux parties centrales (ALAP) apparaissent respectivement sous la forme de combinaisons d'états de ligne différents pouvant être différenciés dans l'ensemble de ces lignes, sur la base de la succession de l'apparition de changements d'états de ligne lors de la production de ces états.

# FIG 1

# FIG 2